# EUROPÄISCHE PATENTSCHRIFT

(11) **EP 1 348 315 B1**
(45) Veröffentlichungstag und Bekanntmachung des Hinweises auf die Patenterteilung: **23.02.2011**
(21) Anmeldenummer: 01900014.0
(22) Anmeldetag: 05.01.2001
(51) Int. Cl.: H04R 25/00

(54) **VERFAHREN ZUM BETRIEB EINES HÖRGERÄTS UND HÖRGERÄT DAFÜR**
METHOD FOR USE OF A HEARING-AID AND CORRESPONDING HEARING AID
PROCEDE D'UTILISATION DE PROTHESE AUDITIVE, ET PROTHESE AUDITIVE CORRESPONDANTE

(43) Veröffentlichungstag der Anmeldung: 01.10.2003
(73) Patentinhaber: PHONAK AG, 8712 Stäfa (CH)
(72) Erfinder: ALLEGRO, Silvia, CH-8618 Oetwil am See (CH); BÜCHLER, Michael, CH-8006 Zürich (CH)
(74) Vertreter: Rigling, Peter Daniel
(86) Internationale Anmeldenummer: PCT/CH2001/000008
(87) Internationale Veröffentlichungsnummer: WO 2001/020965

(56) Entgegenhaltungen:
- EP-A- 0 681 411
- EP-A- 0 881 625
- WO-A-01/76321
- US-A- 6 002 776
- MELLINGER D K: "Feature-map methods for extracting sound frequency modulation" SIGNALS, SYSTEMS AND COMPUTERS, 1991. 1991 CONFERENCE RECORD OF THE TWENTY-FIFTH ASILOMAR CONFERENCE ON PACIFIC GROVE, CA, USA 4-6 NOV. 1991, LOS ALAMITOS, CA, USA,IEEE COMPUT. SOC, US, 4. November 1991 (1991-11-04), Seiten 795-799, XP010026410 ISBN: 0-8186-2470-1

## Beschreibung

Die vorliegende Erfindung betrifft ein Verfahren zum Betrieb eines Hörgerätes sowie ein Hörgerät.

Moderne Hörgeräte können heute mit Hilfe verschiedener Hörprogramme - typischerweise sind dies zwei bis maximal drei Programme - unterschiedlichen akustischen Umgebungssituationen angepasst werden. Damit soll das Hörgerät dem Benutzer in jeder Situation einen optimalen Nutzen bieten.

Die Wahl des Hörprogramms kann entweder über die Fernbedienung oder über einen Schalter am Hörgerät selbst vorgenommen werden. Das Umschalten zwischen verschiedenen Hörprogrammen ist jedoch für viele Benutzer lästig oder schwierig, wenn nicht sogar unmöglich. Welches Programm zu welchem Zeitpunkt den optimalen Komfort und die beste Sprachverständlichkeit bietet, ist auch für versierte Hörgeräteträger nicht immer einfach zu bestimmen. Ein automatisches Erkennen der akustischen Umgebungssituation und ein damit verbundenes automatisches Umschalten des Hörprogramms im Hörgerät ist daher wünschenswert.

Es sind derzeit verschiedene Verfahren für die automatische Klassifizierung von akustischen Umgebungssituationen bekannt. Bei all diesen Verfahren werden aus dem Eingangssignal, das beim Hörgerät von einem oder mehreren Mikrofonen stammen kann, verschiedene Merkmale extrahiert. Basierend auf diesen Merkmalen trifft ein Mustererkenner unter Anwendung eines Algorithmus eine Entscheidung über die Zugehörigkeit des analysierten Eingangssignals zu einer bestimmten akustischen Umgebungssituation. Die verschiedenen bekannten Verfahren unterscheiden sich dabei einerseits durch die unterschiedlichen Merkmale, welche bei der Beschreibung der akustischen Umgebungssituation verwendet werden (Signalanalyse), und andererseits durch den verwendeten Mustererkenner der die Merkmale klassifiziert (Signalidentifikation).

Für die Merkmalsextraktion in Audiosignalen wurde im Aufsatz von J. M. Kates mit dem Titel "Classification of Background Noises für Hearing-Aid Applications" (1995, Journal of the Acoustical Society of America 97(1), Seiten 461 bis 469) vorgeschlagen, eine Analyse der zeitlichen Pegelschwankungen und des Spektrums vorzunehmen. Des weiteren wurde in der Europäischen Patentschrift mit der Nummer EP-B1-0 732 036 eine Analyse des Amplitudenhistogramms zur Erreichung des gleichen Ziels vorgeschlagen. Schliesslich wurde die Merkmalsextraktion auch durch eine Analyse verschiedener Modulationsfrequenzen untersucht und angewendet. Diesbezüglich wird auf die beiden Aufsätze von Ostendorf et. al. mit den Titeln "Empirische Klassifizierung verschiedener akustischer Signale und Sprache mittels einer Modulationsfrequenzanalyse" (1997, DAGA 97, Seiten 608 bis 609) und "Klassifikation von akustischen Signalen basierend auf der Analyse von Modulationsspektren zur Anwendung in digitalen Hörgeräten" (1998, DAGA 98, Seiten 402 bis 403) verwiesen. Ein ähnlicher Ansatz ist auch in einem Aufsatz von Edwards et. al. mit dem Titel "Signal-processing algorithms for a new sofware-based, digital hearing device" (1998, The Hearing Journal 51, Seiten 44 bis 52) offenbart. Weitere mögliche Merkmale sind der Pegel selbst oder die Nulldurchgangsrate wie z.B. in H. L. Hirsch, "Statistical Signal Characterization" (Artech House 1992) beschrieben. Die bisher zur Audiosignalanalyse verwendeten Merkmale sind also rein technisch-basiert.

Grundsätzlich lassen sich für die Geräuschklassifizierung bekannte Musteridentifikationsmethoden verwenden. So eignen sich insbesondere sogenannte Abstandaschätzer, Bayes Klassifizierer, Fuzzy Logic Systeme oder Neuronale Netzwerke als Mustererkenner. Weitere Informationen zu den zwei erst genannten Methoden können der Druckschrift "Pattern Classification and Scene Analysis" von Richard O. Duda und Peter E. Hart (John Wiley & Sons, 1973) entnommen werden. Bezüglich Neuronalen Netzwerken wird auf das Standardwerk von Christopher M. Bishop mit dem Titel "Neural Networks for Pattern Recognition" (1995, Oxford University Press) verwiesen. Des weiteren wird auf die folgenden Publikationen verwiesen: Ostendorf et. al., "Klassifikation von akustischen Signalen basierend auf der Analyse von Modulationsspektren zur Anwendung in digitalen Hörgeräten" (Zeitschrift für Audiologie, 1998, Seiten 148 bis 150); F. Feldbusch, "Geräuscheerkennung mittels Neuronaler Netzwerke" (1998, Zeitschrift für Audiologie, Seiten 30 bis 36); Europäische Patentanmeldung mit der Veröffentlichungsnummer EP-A1-0 814 636; und US-Patent mit der Veröffentlichungsnummer US-5 604 812. All die genannten Mustererkennungsmethoden haben jedoch den Nachteil, dass sie lediglich statische Eigenschaften der interessierenden Geräuschklassen modellieren.

Des Weiteren ist aus EP 0 881 625 ein System zur Spracherkennung bekannt, bei dem gesprochene Worte in einen schriftlichen Text umgesetzt werden. Dabei werden die gesprochenen Worte (Äusserungen) unter verschiedensten Wiedergabebedingungen aufgezeichnet und als Muster abgelegt, welche als Basis für eine Wiedererkennung bei der Spracherkennung mittels Hidden Markov Modellen verwendet werden. Die Wiedergabebedingungen beschränken sich dabei auf die Wiedergabe desselben Wortes durch verschiedene Sprecher mit unterschiedlichem Alter, Dialekt, Geschlecht, Aussprache, etc.

Ein weiteres solches System ist offenbart in der PCT-Anmeldug PCT/DK01/0026. Die bekannten Methoden zur Geräuschklassifikation, bestehend aus Merkmalsextraktion und Mustererkennung, weisen die Nachteile auf, dass, obwohl eine eindeutige und robuste Identifikation von Sprachsignalen grundsätzlich möglich ist, mehrere verschiedene akustische Umgebungssituationen nicht oder nur in unzureichender Weise klassifiziert werden können. So ist es zwar mit den bekannten Verfahren möglich, reine Sprachsignale von "Nicht-Sprache" d.h. allen anderen akustischen Umgebungssituationen - unterscheiden zu können. Dies reicht jedoch nicht aus, damit ein für eine momentane akustische Umgebungssituation zu verwendendes optimales Hörprogramm gewählt werden kann. Als Folge davon ist entweder die Anzahl möglicher Hörprogramme auf die zwei automatisch erkennbaren akustischen Umgebungssituationen beschränkt oder der Hörgeräteträger muss die nicht abgedeckten akustischen Umgebungssituationen selber erkennen und das dazugehörige Hörprogramm von Hand aktivieren.

Der vorliegenden Erfindung liegt daher die Aufgabe zugrunde, zunächst ein Verfahren zur Bestimmung einer momentanen akustischen Umgebungssituation anzugeben, das gegenüber den bekannten Verfahren wesentlich robuster und genauer ist.

Diese Aufgabe wird durch die in Anspruch 1 angegebenen Massnahmen gelöst. Vorteilhafte Ausgestaltungen der Erfindung, eine Anwendung des Verfahrens sowie ein Hörgerät sind in weiteren Ansprüchen angegeben.

Die Erfindung basiert auf einer Extraktion von Signalmerkmalen und einer nachfolgenden Separation verschiedener Geräuschquellen sowie einer Identifikation verschiedener Geräusche. Anstatt oder neben technisch-basierten Merkmalen werden bei der Signalanalyse zur Merkmalsextraktion auditorisch-basierte Merkmale berücksichtigt. Diese auditorisch-basierten Merkmale werden mit Methoden der Auditory Scene Analysis (ASA) ermittelt. In einer weiteren Ausführungsform des erfindungsgemässen Verfahrens erfolgt eine Gruppierung der Merkmale mit Hilfe der Gestaltprinzipien kontextunabhängig oder kontextabhängig. Die eigentliche Identifikation bzw. Klassifizierung der Audiosignale erfolgt ausgehend von den extrahierten Merkmalen in bevorzugter Weise mittels Hidden Markov Modellen (HMM). Die Erfindung weist den Vorteil auf, dass die Anzahl der erkennbaren Geräuschklassen und damit die Anzahl der Hörprogramme erhöht ist, womit die Leistung der Geräuschklassifizierung und damit der Komfort für den Benutzer des Hörgerätes verbessert sind.

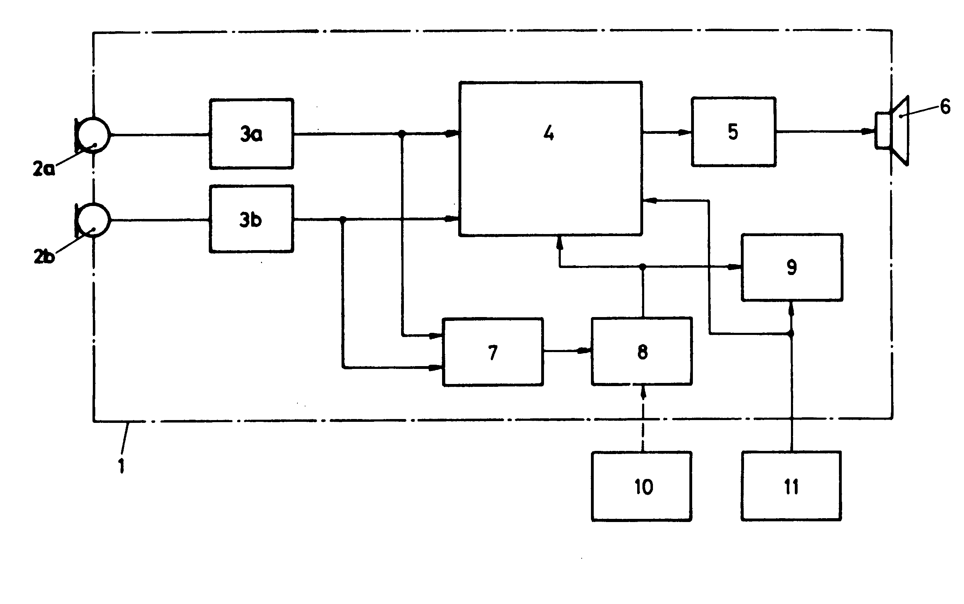

Die Erfindung wird nachfolgend anhand einer Zeichnung beispielsweise näher erläutert. Dabei zeigt die einzige Figur ein Blockschaltbild eines Hörgerätes, in dem das erfindungsgemässe Verfahren realisiert ist.

In der einzige Figur ist mit 1 ein Hörgerät bezeichnet, wobei im folgenden unter dem Begriff "Hörgerät" sowohl sogenannte Hörhilfen, welche zur Korrektur eines geschädigten Hörvermögens einer Person eingesetzt werden, als auch alle anderen akustischen Kommunikationssysteme, wie zum Beispiel Funkgeräte, zu verstehen sind.

Das Hörgerät 1 ist in bekannter Weise zunächst aus zwei elektro-akustischen Wandlern 2a, 2b und 6, nämlich einem oder mehreren Mikrophonen 2a, 2b und einem Lautsprecher 6 - auch etwa als Hörer bezeichnet - besteht. Ein eigentlicher Hauptbestandteil eines Hörgerätes 1 ist eine mit 4 bezeichnete Übertragungseinheit, in welcher die - im Falle einer Hörhilfe - auf den Benutzer des Hörgerätes 1 abgestimmten Signalmodifikationen vorgenommen werden. Die in der Übertragungseinheit 4 vorgenommenen Operationen sind jedoch nicht nur von der Art einer vorgegebenen Zielfunktion des Hörgerätes 1 abhängig, sondern werden insbesondere auch in Abhängigkeit der momentanen akustischen Umgebungssituation gewählt. Aus diesem Grund wurden z. B. bereits Hörhilfen angeboten, bei denen der Geräteträger eine manuelle Umschaltung zwischen verschiedenen Hörprogrammen vornehmen kann, die auf bestimmte akustische Umgebungssituationen angepasst sind. Ebenso sind Hörhilfen bekannt, bei denen die Erkennung der akustischen Umgebungssituation automatisch vorgenommen wird. Diesbezüglich sei nochmals auf die europäischen Patentschriften mit den Veröffentlichungsnummern EP-B1-0 732 036 und EP-A1-0 814 636 sowie auf das US Patent mit der Veröffentlichungsnummer US-5 604 812, und auf die Broschüre "Claro Autoselect" der Firma Phonak hearing systems (28148(GB)/0300, 1999) verwiesen.

Neben den erwähnten Bestandteilen - wie Mikrophone 2a, 2b, Übertragungseinheit 4 und Hörer 6 - ist im Hörgerät 1 eine Signalanalyseeinheit 7 und eine Signalidentifikationseinheit 8 vorgesehen. Handelt es sich beim Hörgerät 1 um eine Realisierung mittels Digitaltechnologie, so sind zwischen den Mikrophonen 2a, 2b und der Übertragungseinheit 4 ein oder mehrere Analog/Digital-Wandler 3a, 3b und zwischen der Übertragungseinheit 4 und dem Hörer 6 ein Digital/AnalogWandler 5 vorgesehen. Obwohl die Realisierung in Digitaltechnologie die bevorzugte Ausführungsform der vorliegenden Erfindung ist, ist grundsätzlich auch denkbar, dass alle Komponenten in Analogtechnologie realisiert sind. Diesfalls entfallen selbstverständlich die Wandler 3a, 3b und 5.

Die Signalanalyseeinheit 7 ist mit dem gleichen Eingangssignal beaufschlagt wie die Übertragungseinheit 4. Schliesslich ist die Signalidentifikationseinheit 8, welche mit dem Ausgang der Signalanalyseeinheit 7 verbunden ist, mit der Übertragungseinheit 4 und mit einer Steuereinheit 9 verbunden.

Mit 10 ist eine Trainingseinheit bezeichnet, mit Hilfe derer die Ermittlung von für die Klassifizierung in der Signalidentifikationseinheit 8 benötigten Parameter in einem "off-line"-Betrieb vorgenommen wird.

Die durch die Signalanalyseeinheit 7 und die Signalidentifikationseinheit 8 ermittelten Einstellungen der Übertragungseinheit 4 und der Steuereinheit 9 können durch den Benutzer mittels einer Benutzereingabeeinheit 11 überschrieben werden.

Im folgenden wird das erfindungsgemässe Verfahren erläutert:
Es basiert im wesentlichen darauf, dass in einer Extraktionsphase charakteristische Merkmale aus einem akustischen Signal extrahiert werden, wobei anstelle oder zusätzlich zu technisch-basierten Merkmalen - wie z. B. die früher erwähnten Nulldurchgangsraten, zeitlichen Pegelschwankungen, verschiedenen Modulationsfrequenzen, oder der Pegel, der spektrale Schwerpunkt, die Amplitudenverteilung, etc. - auch auditorisch-basierte Merkmale verwendet werden. Diese auditorisch-basierten Merkmale werden mit Hilfe der Auditory Scene Analysis (ASA) ermittelt und umfassen insbesondere die Lautheit, die spektrale Form (timbre), die harmonische Struktur (pitch), gemeinsame Einschwing- und Ausschwingzeiten (on-/offsets), kohärente Amplitudenmodulationen, kohärente Frequenzmodulationen, kohärente Frequenzübergänge, binaurale Effekte, etc. Erläuterungen zur Auditory Scene Analysis sind z. B. in den Werken von A. Bregman, "Auditory Scene Analysis" (MIT Press, 1990) und W. A. Yost, "Fundamentals of Hearing - An Introduction" (Academic Press, 1977) zu finden. Angaben zu den einzelnen auditorisch-basierten Merkmalen findet man u.a. in W. A.Yost und S. Sheft, "Auditory Perception" (in "Human Psychophsics", herausgegeben von W. A. Yost, A. N. Popper und R. R. Fay, Springer 1993), W. M. Hartmann, "Pitch, periodicity, and auditory organization" (Journal of the Acoustical Society of America, 100 (6), Seiten 3491 bis 3502, 1996), sowie D. K. Mellinger und B. M. Mont-Reynaud, "Scene Analysis" (in "Auditory Computation", herausgegeben von H. L. Hawkins, T. A. McMullen, A. N. Popper und R. R. Fay, Springer 1996).

Als Beispiel für die Verwendung von auditorisch-basierten Merkmalen bei der Signalanalyse sei an dieser Stelle die Charakterisierung der Tonalität des akustischen Signals durch die Analyse der harmonischen Struktur angegeben, was speziell für die Identifikation tonaler Signale, wie Sprache und Musik, geeignet ist.

Bei einer weiteren Ausführungsform des erfindungsgemässen Verfahrens ist es vorgesehen, in der Signalanalyseeinheit 7 des weiteren eine Gruppierung der Merkmale mittels GestaltPrinzipien vorzunehmen. Dabei werden die Prinzipien der Gestalttheorie, bei der qualitative Eigenschaften - wie Kontinuität, Nähe, Ähnlichkeit, gemeinsames Schicksal, Geschlossenheit, gute Fortsetzung und andere - untersucht werden, auf die auditorisch-basierten und eventuell technischen Merkmale zur Bildung von auditorischen Objekten angewendet. Die Gruppierung kann - wie übrigens auch die Merkmalsextraktion in der Extraktionsphase - entweder kontext-unabhängig, also ohne Hinzunahme von zusätzlichem Wissen, durchgeführt werden (sogenannt "primitive" Gruppierung), oder sie kann kontext-abhängig im Sinne der menschlichen auditorischen Wahrnehmung unter Verwendung von zusätzlicher Information oder Hypothesen über den Signalgehalt erfolgen (sogenannt "schema-basierte" Gruppierung). Die kontext-abhängige Gruppierung ist also der jeweiligen akustischen Situation angepasst. Für ausführliche Erläuterungen der Prinzipien der Gestalttheorie und der Gruppierung mittels Gestaltprinzipien sei stellvertretend auf folgende Veröffentlichungen verwiesen: "Wahrnehmungspsychologie" von E. B. Goldstein (Spektrum Akademischer Verlag, 1997), "Neuronale Grundlagen der Gestaltwahrnehmung" von A. K. Engel und W. Singer (Spektrum der Wissenschaft, 1998, Seiten 66-73), sowie "Auditory Scene Analysis" von A. Bregman (MIT Press, 1990).

Der Vorteil der Anwendung dieser Gruppierungsverfahren liegt darin, dass die Merkmale des Eingangssignals weiter differenziert werden können. Insbesondere sind dadurch Signalteile identifizierbar, welche von unterschiedlichen Klangquellen stammen. Dies ermöglicht, dass die extrahierten Merkmale einzelnen Geräuschquellen zugeordnet werden können, womit zusätzliches Wissen über die vorhandenen Geräuschquellen - und damit über die momentane Umgebungssituation - erhalten wird.

Der zweite Aspekt des hier beschriebenen erfindungsgemässen Verfahrens betrifft die Mustererkennung bzw. die Signalidentifikation, welche in der Identifikationsphase vorgenommen wird. In der bevorzugten Ausführungsform des erfindungsgemässen Verfahrens kommt in der Signalidentifikationseinheit 8 zur automatischen Klassifizierung der akustischen Umgebungssituation die Methode der Hidden Markov Modelle (HMM) zur Anwendung. Damit können auch zeitliche Änderungen der berechneten Merkmale zur Klassifizierung eingesetzt werden. Demzufolge können auch dynamische und nicht nur statische Eigenschaften der zu erkennenden Umgebungssituationen resp. Geräuschklassen berücksichtigt werden. Ebenfalls möglich ist die Kombination von HMMs mit anderen Klassifizierern, z. B. in einem mehrstufigen Erkennungsverfahren, zur Identifikation der akustischen Umgebung.

Das Ausgangssignal der Signalidentifikationseinheit 8 enthält somit Informationen über die Art der akustischen Umgebung (akustische Umgebungssituation). Diese Information wird der Übertragungseinheit 4 beaufschlagt, in der das für die erkannte Umgebungssituation geeignetste Programm bzw. der geeignetste Parametersatz für die Übertragung ausgewählt wird. Gleichzeitig wird die in der Signalidentifikation 8 ermittelte Information der Steuereinheit 9 für weitere Funktionen beaufschlagt, wo je nach Situation eine beliebige Funktion - z.B. ein akustisches Signal - ausgelöst werden kann.

Werden in der Identifikationsphase Hidden Markov Modelle verwendet, so wird ein aufwendiges Verfahren zur Ermittlung der für die Klassifizierung notwendigen Parameter notwendig. Diese Parameterermittlung erfolgt daher vorzugsweise in einem "Off-line"-Verfahren, und zwar für jede Klasse allein. Die eigentliche Identifikation verschiedener akustischer Umgebungssituationen erfordert nur geringen Speicherplatz und wenig Rechenkapazität. Daher wird vorgeschlagen, eine Trainingseinheit 9 vorzusehen, die zur Parameterbestimmung ausreichend Rechenleistung aufweist und die mit geeigneten Mitteln mit dem Hörgerät 1 zum Zweck des Datentransfers verbindbar sind. Solche Mittel können beispielsweise eine einfache Drahtverbindung mit entsprechenden Steckern sein.

Mit dem erfindungsgemässen Verfahren ist es somit möglich, aus einer Vielzahl verschiedener Einstellmöglichkeiten und automatisch abrufbaren Aktionen die geeignetste auszuwählen, ohne dass der Benutzer des Gerätes selber tätig werden muss. Der Komfort für den Benutzer ist damit wesentlich verbessert, denn es wird unmittelbar nach dem Erkennen einer neuen akustischen Umgebungssituation das richtige Programm bzw. die entsprechende Funktion im Hörgerät 1 selbsttätig gewählt.

Benutzer von Hörgeräten haben oft auch den Wunsch, die vorstehend beschriebene automatische Erkennung der Umgebungssituation und die damit verbundene automatische Wahl des entsprechenden Programms auszuschalten. Aus diesem Grund ist eine Eingabeeinheit 11 vorgesehen, mit der automatische Reaktionen oder die automatische Programmwahl überschrieben werden kann. Eine solche Eingabeeinheit 11 kann z. B. ein Schalter am Hörgerät 1 oder eine Fernbedienung sein, welche durch den Benutzer betätigt wird. Andere Möglichkeiten wie z. B. eine sprachgesteuerte Benutzereingabe sind ebenfalls denkbar.

## Patentansprüche

1. Verfahren zum Betrieb eines Hörgerätes (1), wobei das Verfahren darin besteht,
- dass in einer Extraktionsphase charakteristische Merkmale aus einem mit mindestens einem Mikrophon (2a, 2b) aufgenommenen akustischen Signal extrahiert werden, wobei zumindest auditorisch-basierte Merkmale ermittelt werden,
- dass in einer Identifikationsphase eine momentane akustische Umgebungssituation aufgrund der extrahierten Merkmale ermittelt wird, und
- dass aufgrund der ermittelten momentanen akustischen Umgebungssituation ein Programm bzw. eine Übertragungsfunktion zwischen mindestens einem Mikrofon (2a, 2b) und einem Hörer (6) im Hörgerät (1) eingestellt wird, wobei eine solche Einstellung durch den Hörgerätbenutzer mittels einer Benutzereingabeeinheit (11) überschrieben werden kann.

2. Verfahren nach Anspruch 1, **dadurch gekennzeichnet, dass** in der Extraktionsphase zur Bestimmung der charakteristischen Merkmale ASA-(Auditory Scene Analysis)-Methoden verwendet werden.

3. Verfahren nach Anspruch 1 oder 2, **dadurch gekennzeichnet, dass** in der Identifikationsphase zur Bestimmung der momentanen akustischen Umgebungssituation HMM-(Hidden Markov Models)-Methoden verwendet werden.

4. Verfahren nach einem der Ansprüche 1 bis 3, **dadurch gekennzeichnet, dass** ein oder mehrere der folgenden auditorisch-basierten Merkmale bei der Merkmalsextraktion ermittelt werden: Lautheit, spektrale Form, harmonische Struktur, gemeinsame Ein- und Ausschwingvorgänge, kohärente Amplitudenmodulationen, kohärente Frequenzmodulationen, kohärente Frequenztransitionen und binaurale Effekte.

5. Verfahren nach einem der vorangehenden Ansprüche, **dadurch gekennzeichnet, dass** zusätzlich zu auditorisch-basierten Merkmalen auch beliebige andere Merkmale ermittelt werden.

6. Verfahren nach einem der vorangehenden Ansprüche, **dadurch gekennzeichnet, dass** zur Bildung von auditorischen Objekten die auditorisch-basierten und die gegebenenfalls anderen Merkmale mit den Prinzipien der Gestalttheorie gruppiert werden.

7. Verfahren nach Anspruch 6, **dadurch gekennzeichnet, dass** die Merkmalsextraktion und/oder die Gruppierung der Merkmale entweder kontext-unabhängig oder kontext-abhängig im Sinne der menschlichen auditorischen Wahrnehmung, unter Berücksichtigung von zusätzlicher Information oder Hypothesen über den Signalgehalt und somit der jeweiligen akustischen Situation angepasst, durchgeführt wird.

8. Verfahren nach einem der vorangehenden Ansprüche, **dadurch gekennzeichnet, dass** in der Identifikationsphase auf Daten zugegriffen werden, welche in einer "off-line"-Trainingsphase ermittelt wurden.

9. Verfahren nach einem der vorangehenden Ansprüche, **dadurch gekennzeichnet, dass** die Extraktionsphase und die Identifikationsphase kontinuierlich resp. in regelmässigen oder unregelmässigen Zeitabständen erfolgt.

10. Hörgerät (1) mit einer Übertragungseinheit (4), die eingangsseitig mit mindestens einem Mikrophon (2a, 2b) und ausgangsseitig mit einem Hörer (6) wirkverbunden ist, wobei
- das Eingangssignal der Übertragungseinheit (4) gleichzeitig einer Signalanalyseeinheit (7) zur Extraktion von zumindest auditorisch-basierten Merkmalen beaufschlagt ist,
- die Signalanalyseeinheit (7) mit einer Signalidentifikationseinheit (8) wirkverbunden ist, in welcher eine momentane akustische Umgebungssituation bestimmt wird, und
- die Signalidentifikationseinheit (8) mit der Übertragungseinheit (4) zur Einstellung eines Programms bzw. einer Übertragungsfunktion wirkverbunden ist, wobei eine solche Einstellung durch den Hörgerätbenutzer mittels einer Benutzereingabeeinheit (11) überschreibbar ist.

11. Hörgerät (1) nach Anspruch 10, **dadurch gekennzeichnet, dass** eine Eingabeeinheit (11) vorgesehen ist, welche mit der Übertragungseinheit (4) wirkverbunden ist.

12. Hörgerät (1) nach Anspruch 10 oder 11, **dadurch gekennzeichnet, dass** eine Steuereinheit (9) vorgesehen ist, wobei die Signalidentifikationseinheit (8) mit der Steuereinheit (9) wirkverbunden ist.

13. Hörgerät (1) nach Anspruch 12, **dadurch gekennzeichnet, dass** die Eingabeeinheit (11) mit der Steuereinheit (9) wirkverbunden ist.

14. Hörgerät (1) nach einem der Ansprüche 10 bis 13,
**dadurch gekennzeichnet, dass** beliebige Mittel zum Übertragen von Parametern von einer Trainingseinheit (10) zur Signalidentifikationseinheit (8) vorgesehen sind.

## Claims

1. Method for operating a hearing device (1), wherein said method consists in that
- characteristic features are extracted from an acoustic signal captured by at least one microphone (2a, 2b) during an extraction phase, wherein at least auditory-based features are determined,
- a momentary acoustic situation is determined on the basis of the extracted features during an identification phase, and
- a program or a transfer function between at least one microphone (2a, 2b) and a receiver (6) in the hearing device (1) is adjusted on the basis of the determined momentary acoustic situation, wherein such an adjustment can be overridden by the hearing device user by means of a user input unit (11).

2. Method according to claim 1, **characterized in that**, during the extraction phase, auditory scene analysis (ASA) techniques are employed for the identification of the characteristic features.

3. Method according to claim 1 or 2, **characterized in that**, during the identification phase, HMM (Hidden Markov Models) methods are used to determine the momentary acoustic situation.

4. Method according to one of the claims 1 to 3, **characterized in that** one or several of the following auditory-based features are identified during the extraction of said characteristic features: loudness, spectral pattern, harmonic structure, common onset and drop-off transients, coherent amplitude modulations, coherent frequency modulations, coherent frequency transitions and binaural effects.

5. Method according to one of the preceding claims, **characterized in that** any other suitable features are identified in addition to the auditory-based features.

6. Method according to one of the preceding claims, **characterized in that** the auditory-based and any other features are grouped along the principles of the Gestalt theory to create auditory objects.

7. Method according to claim 6, **characterized in that** the extraction of features and/or the grouping of the features are/is performed either in context-independent or in context-dependent fashion in the sense of human auditory perception, based upon additional information or hypotheses regarding the signal content and thus adapted to the respective acoustic situation.

8. Method according to one of the preceding claims, **characterized in that**, during the identification phase, data are accessed which were acquired in an off-line training phase.

9. Method according to one of the preceding claims, **characterized in that** the extraction phase and the identification phase take place in continuous fashion or at regular or irregular time intervals.

10. Hearing device (1) with a transmission unit (4) which is, on its input side, operationally connected to at least one microphone (2a, 2b) and, on its output side, operationally connected to a receiver (6), wherein:
- the input signal of the transmission unit (4) is simultaneously fed to a signal analyzing unit (7) for the extraction of at least auditory-based features,
- the signal analyzing unit (7) is operationally connected to a signal identifying unit (8) in which a momentary acoustic situation is determined, and
- the signal identifying unit (8) is operationally connected to the transmission unit (4) to adjust a program or a transfer function, wherein such an adjustment can be overridden by the hearing device user by means of a user input unit (11).

11. Hearing device (1) according to claim 10, **characterized in that** a user input unit (11) is provided which is operationally connected to the transmission unit (4).

12. Hearing device (1) according to claim 10 or 11, **characterized in that** a control unit (9) is provided and that the signal identifying unit (8) is operationally connected to said control unit (9).

13. Hearing device (1) according to claim 12, **characterized in that** the user input unit (11) is operationally connected to the control unit (9).

14. Hearing device (1) according to one of the claims 10 to 13, **characterized in that** any means serving to transfer parameters from a training unit (10) to the signal identifying unit (8) are provided.

## Revendications

1. Procédé pour opérer un dispositif auditif (1), le procédé consiste à faire,
- que des critères caractéristiques d'un signal acoustique reçu par au moins un microphone (2a, 2b) sont extraits dans une phase d'extraction, pour le moins des critères sur la base auditeur sont déterminés,
- qu'une situation momentanée de l'entourage est détectée en vertu des critères extraits dans une phase d'identification, et
- qu'un programme respectivement une fonction de transmission entre au moins un microphone (2a, 2b) et un récepteur (6) dans le dispositif auditif (1) est ajusté en vertu de la situation momentanée de l'entourage, cet ajustement pouvant être transcrit par l'utilisateur du dispositif auditif moyennant une entité d'entrée de l'utilisateur (11).

2. Procédé selon la revendication 1, **caractérisé en ce que** des méthodes-ASA (Auditory Scene Analysis) sont utilisées pour la détermination des critères caractéristiques dans la phase d'extraction.

3. Procédé selon la revendication 1 ou 2, **caractérisé en ce que** des méthodes-HHM (Hidden Markov Models) sont utilisées pour la détermination de la situation momentanée de l'entourage acoustique dans la phase d'identification.

4. Procédé selon une des revendications 1 à 3, **caractérisé en ce qu'**au moins un ou plusieurs critères sur la base auditeur suivants sont déterminés lors de l'extraction de critère: loudness, forme spectrale, structure harmonique, processus communs en régime transitoire ou en régime de l'extinction de l'oscillation, modulations d'amplitude cohérentes, modulations de fréquence cohérentes, transitions de fréquence cohérentes et effets binauraux.

5. Procédé selon une des revendications précédentes, **caractérisé en ce qu'**en outre des critères sur la base auditeur aussi d'autres critères quelconques sont déterminés.

6. Procédé selon une des revendications précédentes, **caractérisé en ce que** les critères sur la base auditeur ou le cas échéant d'autres critères peuvent être groupés selon les principes de la théorie Gestalt pour la formation des objets auditeur.

7. Procédé selon la revendication 6, **caractérisé en ce que** l'extraction des critères et/ou le groupement des critères est effectué soit indépendant du contexte soit dépendant du contexte dans le sens de la perception humaine auditoire en considération de l'information supplémentaire ou hypothèses sur le contenu de signal et par conséquent adaptée à la situation respective acoustique.

8. Procédé selon une des revendications précédentes, **caractérisé en ce que** recours sur des données est faite dans la phase d'identification, qui ont été déterminées dans une phase de training "off-line".

9. Procédé selon une des revendications précédentes, **caractérisé en ce que** la phase d'extraction et la phase d'identification s'effectue continuellement respectivement en des intervalles réguliers ou irréguliers.

10. Dispositif auditif (1) avec une entité de transmission (4), qui est relié fonctionnellement du côté de l'entrée avec au moins un microphone (2a, 2b) et du côté de l'exit avec un récepteur (6),
- le signal d'entrée de l'entité de transmission (4) est alimenté en même temps à une entité d'analyse de signal (7) pour l'extraction pour le moins des critères sur la base auditeur,
- l'entité d'analyse de signal (7) est reliée fonctionnellement à une entité d'identification de signal (8), dans laquelle une situation momentanée de l'entourage est déterminée, et
- l'entité d'identification de signal (8) est reliée fonctionnellement à l'entité de transmission (4) pour l'ajustement d'un programme respectivement d'une fonction de transmission, un tel ajustement étant transcritable par l'utilisateur du dispositif auditif moyennant une entité d'entrée de l'utilisateur (11).

11. Dispositif auditif (1) selon la revendication 10, **caractérisé en ce qu'**une entité d'entrée (11) est prévue, qui est reliée fonctionnellement à l'entité de transmission (4).

12. Dispositif auditif (1) selon la revendication 10 ou 11, **caractérisé en ce qu'**une entité de contrôle (9) est prévue, l'entité d'identification de signal (8) est reliée fonctionnellement à l'entité de contrôle (9).

13. Dispositif auditif (1) selon la revendication 12, **caractérisé en ce que** l'entité d'entrée de l'utilisateur (11) est reliée fonctionnellement à l'entité de contrôle (9).

14. Dispositif auditif (1) selon une des revendications 10 à 13, **caractérisé en ce que** des moyens quelconques pour transmettre des paramètres d'une entité de training (10) à l'entité d'identification de signal (8) sont prévus.
